# EUROPEAN PATENT SPECIFICATION

(11) **EP 2 621 315 B1**
(45) Date of publication and mention of the grant of the patent: **13.05.2015**
(21) Application number: 11752626.9
(22) Date of filing: 30.08.2011
(51) Int. Cl.: A47J 29/02

(54) **COOKING CONTAINER AND COOKING METHOD**
KOCHGEFÄSS UND KOCHVERFAHREN
RÉCIPIENT DE CUISSON ET PROCÉDÉ DE CUISSON

(30) Priority: 27.09.2010 GB 201016174
(43) Date of publication of application: 07.08.2013
(73) Proprietor: Gold, Howard Marc, Bushey WD23 2LR (GB)
(72) Inventor: Gold, Howard Marc, Bushey WD23 2LR (GB)
(74) Representative: ip21 Ltd
(86) International application number: PCT/GB2011/051621
(87) International publication number: WO 2012/042233

(56) References cited:
- CH-A5- 604 644
- DE-A1- 2 409 122
- GB-A- 430 894
- GB-A- 1 026 867
- GB-A- 1 387 116
- US-A- 1 528 231
- US-A- 5 367 775

## Description

### Field of the Invention

The invention relates to cooking containers, in particular for housing eggs, during cooking, and in particular being poached. The invention is also embodied in a method of using the container to poach an egg.

### Background and Prior Art

A poached egg is an egg that has been cooked whilst placed in hot water, where the raw egg is in physical contact with the hot water. Preferably, no oil or fat is used in its preparation.

Broken into hot water, in a saucepan, the white should stay clinging around the yolk, and the result is cooked albumen and runny yolk. The ideal shape of the cooked egg is substantially ovoid, with the white surrounding the yolk.

Although poached egg is one of the most common of dishes, the process of poaching an egg requires skill, and can yield extremely variable results.

There are various techniques documented. For example, to prevent dispersion of the white of the egg, a small amount of vinegar is sometimes added to the boiling water. However this can taint the flavour of the egg. Stirring the water vigorously to create a vortex is another method used to reduce dispersion, with the raw egg being placed into the centre of the swirling water. The fact that only one egg can be cooked at a time, once every few minutes, makes the process impractical in most non-domestic contexts.

Because of the difficulty in creating real poached eggs in the manner detailed above, the term "poached egg" has come to be commonly applied to a form of steamed or coddled egg, whereby the egg is placed in a cup-shaped receptacle, colloquially known as "an egg poacher" which is suspended over or floated in simmering water. The result is a cup-shaped egg, which has been cooked on the sides and bottom by direct contact with the hot surface of the cup, and the exposed top of the egg is steamed. The resultant dish is often tainted by the flavour of oil or butter used as a release agent. The shape of the egg is entirely different from that achieved by proper poaching in water, and the look, texture and flavour of the cooked egg is quite unlike a water-poached egg.

One method, using cling-film to keep the egg perfectly formed, has been documented. This results in a pleasing shape, but is not poaching, as no contact is made between the water and the egg, which is sealed inside impermeable plastic. A release agent, such as olive oil is used, which taints the egg, and there are possible health concerns over cooking food in contact with cling film.

Other methods of producing poached eggs have also been documented, such as dropping a cup filled with the raw egg into hot water, or attempting to keep the raw egg contained within a baking ring whilst submerged. None of these techniques is reliable.

Real water-poached eggs are becoming more popular with amateur chefs, and there are many dishes which require a proper water immersed poached egg, but the difficulties and frustrations inherent in their production remain.

The applicant is aware of the following prior art documents JP2006087378 (KANAE FOODS), US3007733 (MASAHARU), US2404130 (LOUIS). In all of the citations the contacting of the egg with the water is via the water flowing through apertures which albumin may also either flow through or at least flow into. In the case of LOUIS, a combination of holes and slots is provided. There are two key problems associated with the provision of holes of the type displayed in the prior art documents. The first is that the albumin, which is denser that water, will tend to seep through the holes, blocking them and solidifying within them. This stops the perforations from fulfilling either a drainage or a circulation function. The second is that once set, the albumin which has seeped into the apertures causes the entire poached egg to adhere to the containers themselves, making removal of the cooked egg difficult.

In order to overcome these limitations, the present invention is a container made from a partially permeable membrane, wherein the pores are far smaller than those in any of the citations, denying any ingress at al to the egg molecules, but allowing passage to the water molecules.

The applicant further acknowledges Swiss patent application CH60464405 (Wagner Marc). That document discloses a household filter device of the sort used for making coffee comprising a portion of filter paper of conical general shape comprising two separate sheets of paper. The invention further comprises a support. The edges of the respective pieces of paper are locked together via embossing or by a form of notching.

Another container suitable for housing a cooking egg during cooking is known from DE2409122. It is to these problems amongst others that the invention addresses itself and attempts a solution.

### Summary of the invention

In a first broad, independent aspect, the invention comprises a container suitable for housing a cooking egg during cooking, wherein said container is water permeable, and is impermeable to liquids of the density of raw albumen and raw vittelus, wherein the container comprises a first sheet and a second sheet and wherein the two sheets are sealed to each other about their respective peripheral areas, around the, in-use, bottom region of the container, and wherein the in use top region is not sealed, wherein at the top region the unsealed sheets define an aperture so sized as to allow the introduction of a raw cooking egg into the container and characterised in that the container comprises a pair of open ends, the ends defining said aperture and wherein when the container is immersed in a water source and wetted, the open ends of the container tend to adhere gently to each other due to surface tension.

The invention seeks to provide at least one means of overcoming the difficulties in poaching eggs properly. Using such a container, eggs can be immersed and brought into contact with water, without dispersing, the raw egg is put into the container, and the container suspended in a saucepan of hot water. The container stops the egg dispersing into the water, while allowing the hot water to permeate, which poaches the egg. There is no requirement to add vinegar to the water, and there is no requirement to add any grease or oil as a release agent, as once it is cooked, the poached egg slides effortlessly out of the container. The result is a perfectly shaped, untainted, traditional poached egg which can be produced quickly and easily by unskilled cooks, and also has the advantage of allowing multiple poached eggs to be prepared simultaneously in the same pan.

In a first subsidiary aspect, the container has an interior which comprises a flexible pouch.

The provision of a flexible pouch allows for changes of shape to accommodate different volumes of raw egg, whilst maintaining a desirable pillow shape.

Preferably, the pouch is flat or flat folding.

This feature advantageously allows the storage of the container in minimal space. This feature is of particular merit from a sales and transport perspective; the containers will take up little room in a shipping container, a box in a shop or on a domestic shelf.

In a second subsidiary aspect, the container comprises a first sheet and a second sheet and wherein the two sheets are sealed to each other about their respective peripheral areas, around the, in use, bottom region of the container.

The simple two sheet design is cheap and easy to manufacture, and the simplicity of the design militates against leaks.

Preferably, the first sheet entirely overlies the second sheet.

In a third subsidiary aspect, the container is substantially oval in shape.

This provides the user with a memory aid - the form of the container reminds the user of its function.

In a fourth subsidiary aspect, the container is ovoid in use.

This feature facilitates the production of classic, "pillow shaped" poached eggs, which are likely to be more attractive to the consumer.

In a fifth subsidiary aspect, the top region is substantially semi-circular and the bottom region is substantially elliptical. This tells the user visually which way up to use it.

In a sixth subsidiary aspect, the container comprises a non-stick material.

Non-stick material aids the removal of the poached egg from the container after cooking.

In a seventh subsidiary aspect, the container is made of heat sealable paper.

Heat sealable paper has been found, in the correct weight and specification (selectable from known alternatives by straightforward trial and error) to be impermeable to raw egg.

Using heat sealable paper further simplifies the design of the container; adhesive does not have to be used, which is beneficial in that the adhesive does not have the opportunity to taint the egg.

In an eighth subsidiary aspect, the container is made of Infusion webbing.

Because the internal surface of infusion webbing is a web of paper and thermoplastic (which has a melting point far in excess of the boiling water), it has been found during experimentation to have a surprising but useful quality of being non-stick to poached eggs.

Infusion webbing, also known as infusion paper, also has advantages of being food-safe and bulk production of the container can be carried out using a customised cutter on a conventional form/fill/seal machine, a method well known in the art.

In a ninth subsidiary aspect, the container is made from coffee filter paper.

Coffee filter paper, has been found to be a readily available and very suitable material from which to fashion the egg poacher.

Preferably, the seal at the bottom of the container comprises an exterior-contacting face with one or more projections.

These projections aid the user in holding the container when ejecting the egg from the container, and prevent him / her coming into contact with the hot egg.

In a tenth subsidiary aspect, the top of the container comprises a pair of secondary apertures.

The secondary apertures allow the container to be picked up more easily with tongs or a fork.

In an eleventh subsidiary aspect, the interior of the pouch is ovular in shape.

This preferred shape advantageously produces correctly shaped eggs.

The invention also comprises a container substantially as described herein, with reference to and as illustrated by any combination of the text and / or drawings.

In a second broad, independent aspect the invention comprises a method of cooking an initially raw or only partly precooked foodstuff - for example an egg - comprising the steps of placing the foodstuff in a container which is water permeable and is impermeable to liquids of the density of raw albumen and raw vittelus, and has an in use top region and an in use bottom region, and said top comprises an aperture so sized to allow the introduction of a raw or precooked foodstuff into the container placing the container in sufficiently heated water, Leaving the container in the heated water for a user defined period of time, removing the container from the water and inverting the container to eject the cooked foodstuff.

The invention also comprises a method substantially as described herein, with reference to and as illustrated by any combination of the text and / or drawings.

### Brief Description of the Drawings

Embodiments of the invention will now be described in detail, with reference to the figures, in which:
Figure 1 is a perspective side view of a preferred embodiment of the invention
Figure 2 is a perspective side view of a second preferred embodiment of the invention
Figures 3-6 illustrate the invention in use.
Figure 7 shows a further preferred embodiment on the invention.
Figure 8 shows a plurality of containers in a saucepan.

### Detailed description of the preferred embodiments

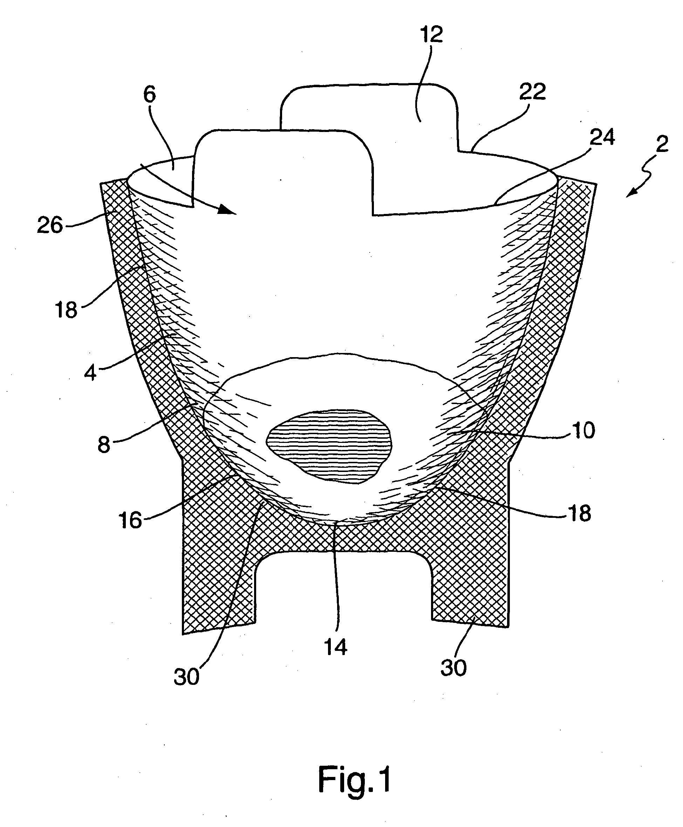

Figure 1 shows a flexible container, indicated generally at 2, which is made from two sheets 4,6. In this embodiment of the container, 2, the sheets 4, 6 are of the same size and shape and completely overlie one another, substantially completely covering one another when the sheets 4, 6 are in their flat or flat folding form. Preferably the sheets 4, 6 are made of infusion webbing, such as the Superseal Coffee Filter Paper, which has a mass of 26gsm. manufactured by Glatfelter Ltd. Infusion webbing, a form of heat sealable paper, more commonly used in tea bags and coffee bags, has been found by the inventor to possess properties, hitherto un-exploited, which allow the passage of water into the container 2, whilst blocking leakage of the liquid albumen. Hence, it has been found that a raw egg 10 can be placed into such a container 2 without the raw egg 10 leaking out, and allowing the container 2 to subsequently be suspended in hot water. The hot water permeates the container 2 and the result is an authentic, water immersed poached egg. Another novel quality of infusion webbing is that due to the construction of the material, the inside surface 50 (not shown) of the container 2 in contact with the egg is primarily of plastics material such as polyethylene, which provides a heat sealing surface. It has been discovered that a useful and surprising effect of this layer is that the cooked egg 20 does not stick to the inside the container 2 but slides out easily without any release agent such as oil, grease or butter.

Infusion Webbing is therefore the preferred material for the composition of the container 2 for the purpose of the present invention. Infusion webbing is a material which in various weights and grades, is commonly used for tea-bags or coffee pods, or other infusible solids as outlined above. The inventor understands that it has not been used to hold liquids before and, as such, such an application is novel. The webbing material may either be woven or non-woven.

Preferably, the sheets 4, 6 are made of heat sealable paper, although a separate sealant may be used. Any shape can be formed within practical limits, so other shaped containers made of infusion paper or other water permeable laminates, and used for the purpose of egg poaching, should be considered within the scope of the invention. Another example is a container 2 of a woven or textile material. A third example is a container 2 of fibrous material.

The container 2 is permeable to water, but impermeable to liquid albumen, such that an egg placed within it poaches in full contact with the water. This can be achieved by various means, and all such methods are considered to be within the scope of this invention. One example would be an impervious material into which are (for example) laser-cut micro perforations of sufficiently small diameter to allow the passage of water molecules, but to act as a barrier to the larger protein molecules of the albumen.

Preferably, the entire container 2 is made from a material which has the required permeability qualities, a semi-permeable flexible sheet which allows the passage of water molecules, but blocks the passage of larger protein molecules, even when they are in liquid form, such as raw egg. Preferably, the material also exhibits non-stick properties, in order to allow the easy removal of the cooked egg 20 without the addition of any oil or fat as a release agent.

At figure 1, the sheets 4, 6 have been sealed into a receptacle, pouch 8 or bag shape, into which a raw egg 10 may be poured and eventually poached. The in use top 12 of the pouch 8 is open in order that the raw egg 10 has a point of ingress, and the in use bottom 14 is curved to form a mould 16. The design of the mould 16 is such that it forms an open parabola 18, which creates the correct shape for the poached egg, and allows the release of the cooked egg 20 without obstruction, In this embodiment, the container 2 is designed so that the raw egg 10 only fills up to approximately half the volume, although other pouches 8 of differing sizes are considered to be within the ambit of the inventive concept. As the container 2 is suspended or even immersed in a water source (not shown) and wetted, the open ends 22, 24 of the container 2 tend to adhere gently to each other due to surface tension. This stops the liquid egg 10 from spilling out, even if the container 2 inverts during the cooking process.

Optionally the seam 26 at the bottom 14 has widened areas 30 which form a finger grip, which is useful when inverting the container 2 to release the cooked contents.

An alternate means of sealing the open ends 22, 24 of the container would be to add an adhesive agent (not shown) to those ends. The adhesive agent is selected so as not to taint the egg.

The container 2 may be printed on. Instructions for use, logos, promotional or any other material may be printed onto container 2. Alternative embodiments may utilise foodsafe heat sensitive inks which begin their reaction when placed in the hot water (number), and complete their reaction - which may be the changing of colour, or the production of text or a symbol - after a period of several minutes, in order to show that the contents (number) of the container 2 are cooked.

In the example given, the paper of which container 2 is made is of a weight of 26gsm, but the paper could be much heavier - up to 50 gsm - or somewhat lighter - as low as 18 gsm. The paper has a wet tensile strength of a range between 40 - 60 g/mm, with approximately 50g/mm being the ideal. The paper has a Dry tensile strength circa 123g/mm and 17.9N/15mm and seal strength potential of circa 400 - 500 g/50mm.

The paper has an air porosity (or permeability) of 500 - 2000 l/m2/sec, as measured with a pressure differential of 200 pa.

The sizes of the pores in the paper are crucial to the working of the invention. Experiments have shown a range of 10-100 microns are effective for the invention. The container must work in such a way as to let water in and out, and to retain raw egg. Water has a density of 1.0 g/cm3 and raw egg has a density of 1.045 g/cm3. As such, it is understood that the density threshold of the container 2 is between those two figures, blocking liquids of a density of just below raw egg (i.e. 1.035 g/cm3) and of a viscosity of a similarly slightly lower figure.

The example paper is of Manilla Hemp, Cellulose and Thermoplastic Fibres - usually either Polyethylene or Polypropylene. The Manila hemp is a long fibre used for strength, the cellulose is used as a filler to modify the porosity as appropriate, and the thermoplastic fibre is applied to the inner side of the container 2. It is this thermoplastic fibre which ensures that the egg does not stick to the inside of the container.

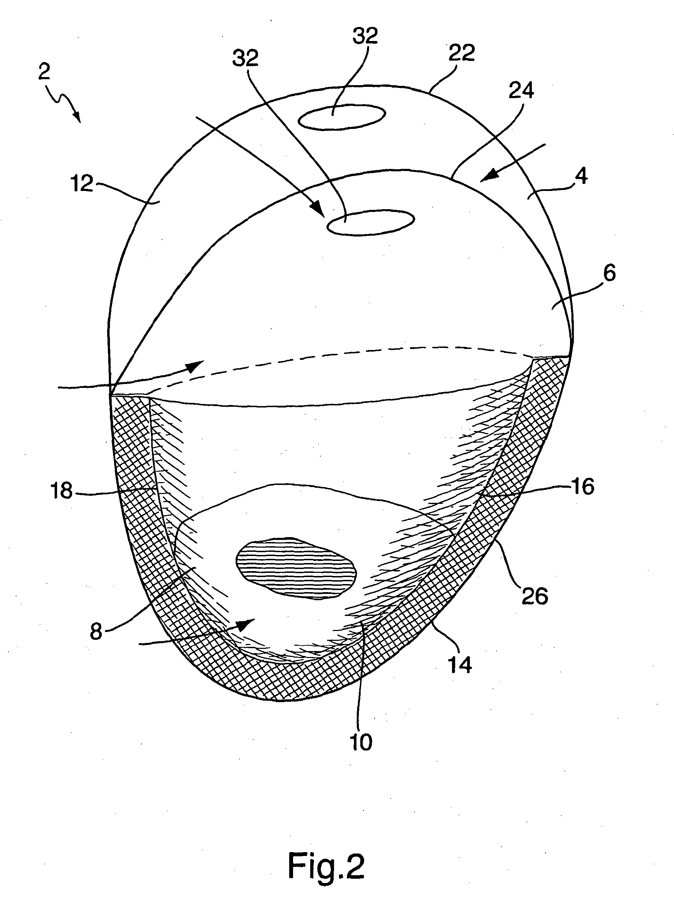

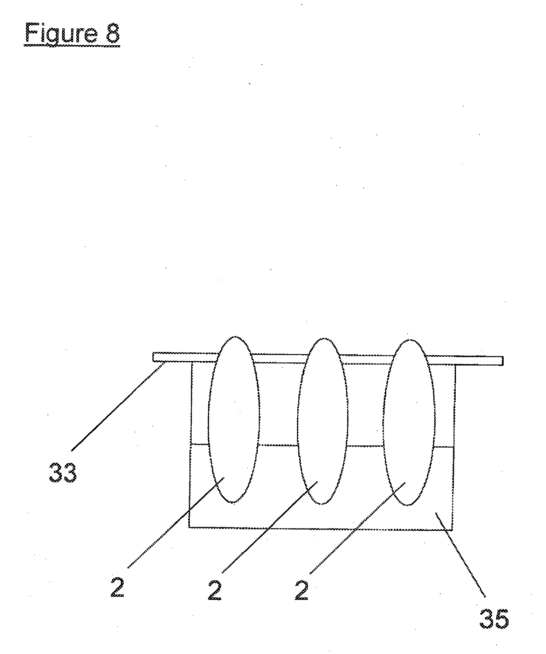

Figure 2 shows a preferred form of the container 2 which is shaped in an ovoid form, both to make a pleasing egg-shape, and to naturally encompass the parabolic shape of the bottom 14. The seam 26 on the peripheral area of the sheets 4,6 is formed by heat sealing. Optionally, the top 12 of the container 2 has one or more secondary slots or apertures 32 so sized as to allow a fork tang to be inserted, in order to lift the container from the boiling water. Alternatively a slotted spoon can be used to remove the entire container 2 from the water it has been cooked in. Figure 8 shows how a beam 33 may be slotted through the secondary apertures 32 of a plurality of containers 2 in order to suspend them in a water filled pan 35.

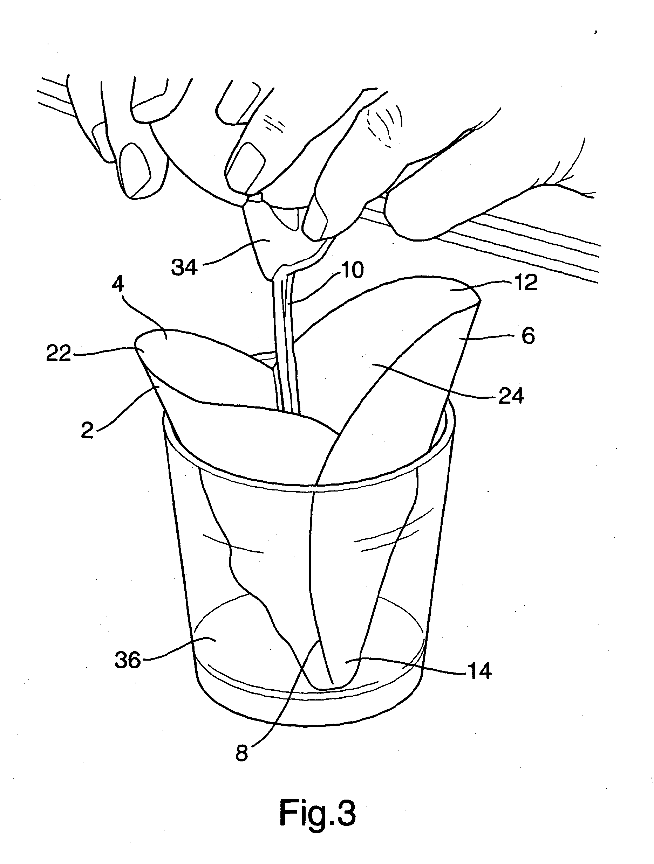

Figure 3 shows the container 2 being filled with raw egg 10. It has been found to be most practical to place the container 2 into a cup or tumbler 36, with the top 14 open.

In preferred methods, the egg 34 may be broken directly into the container 2, and the container 2 taken to the vicinity of a water source with heating means, for example a saucepan 38 on a hob 40. The container 2 will then be lifted out of the cup or tumbler 36.

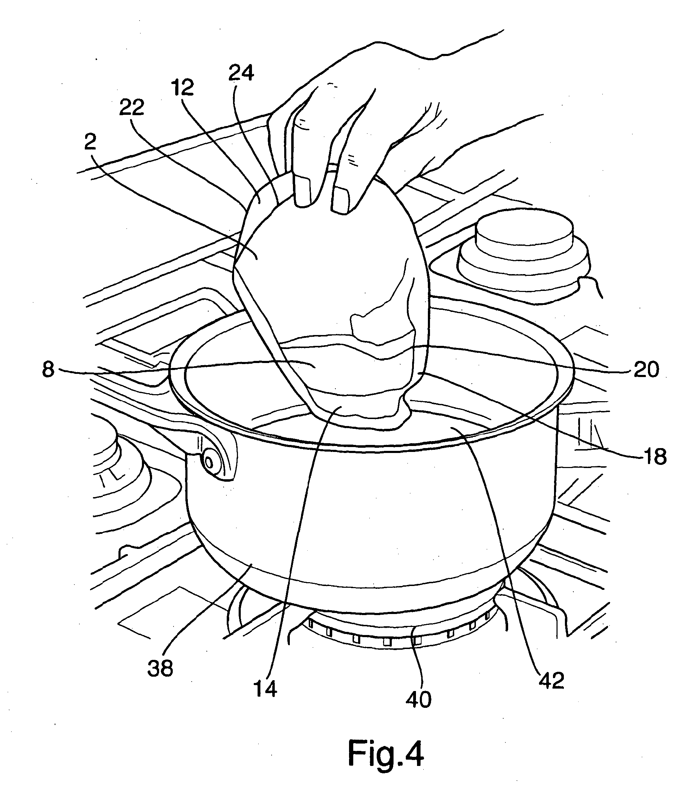

Fig 4 shows the filled container 2 being held vertically, and gently placed into a saucepan 38 of simmering, previously boiled water 42, whereupon it is left to cook for approximately 4 minutes according to individual taste.

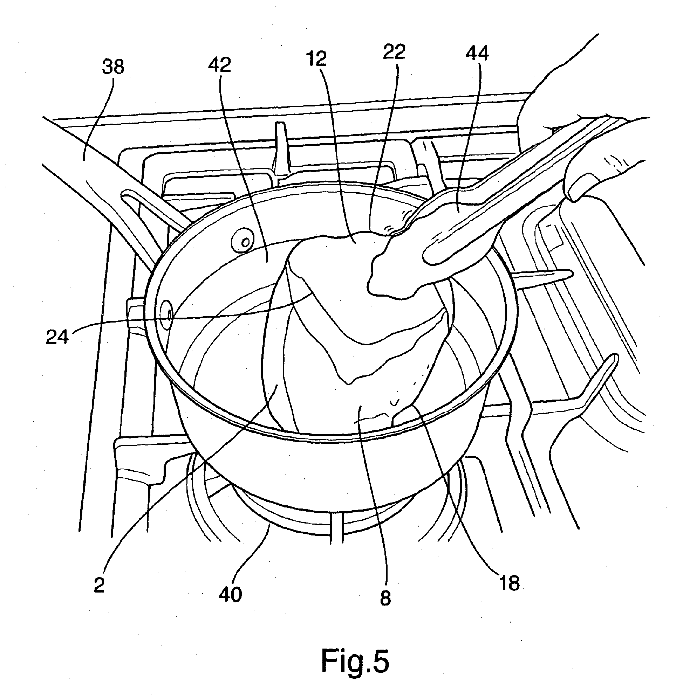

Figure 5 shows the container 2 being removed with tongs 44. Alternatively it can be removed with a slotted spoon, or a fork.

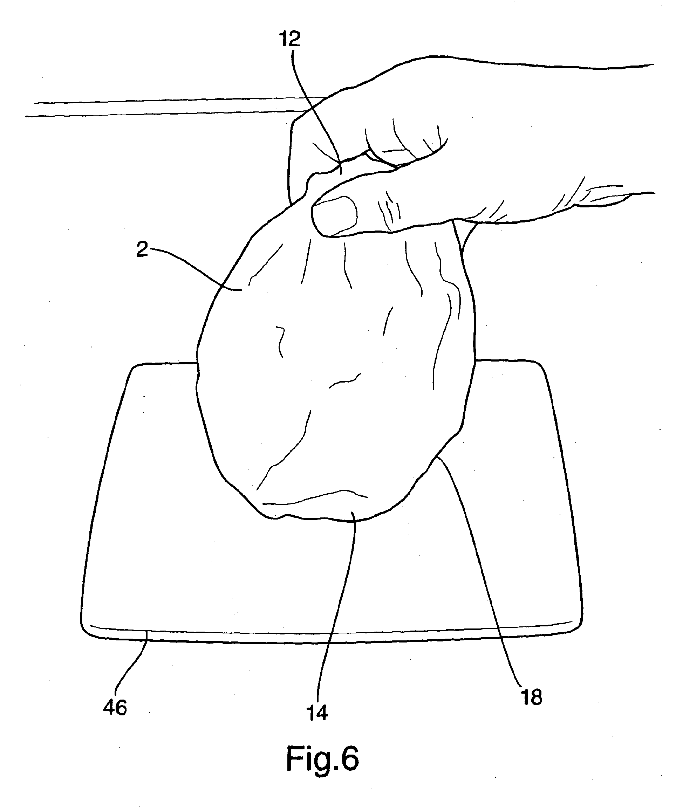

Figure 6 shows the cooked egg 20 being released onto a plate 46, by using the bottom seam 26 as a finger grip, and gently shaking.

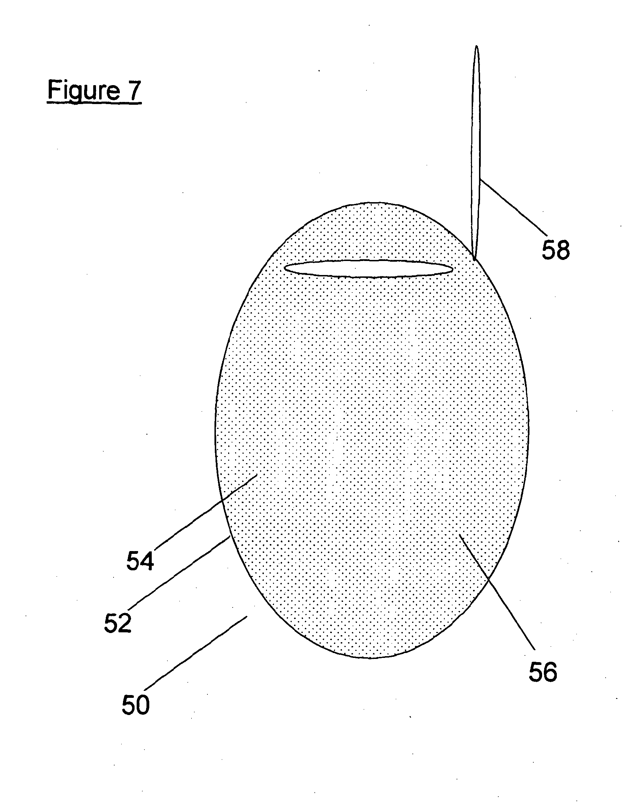

Figure 7 illustrates a further embodiment of the invention 50. Here the container 52 has substantially larger apertures 54, which, were it not for coating 56, which is of a food grade starch. This serves to seal the apertures 54 when the container is outside of the pan, thereby keeping the contents of the container 52 - namely, the components of the egg - properly contained. When the container 52 is introduced to a pan of boiling water, the coating dissolves, and the water can rush through the apertures 54 into the interior of the container 52, leading to the cooking of the contents. In this embodiment, the container 52 may be of a nylon mesh. It is possible to recoat and therefore reuse the container 52 of this embodiment.

Container 52 also comprises a lifting tab 58, which is suitably distanced from the cooking contents and the water to enable the user to lift the container 52 out of the water. A plurality of such tabs may be provided, and are preferred to a string for example, which may catch fire, particularly when the container 52 is being used with a gas cooker.

Any container manufactured with the qualities of water permeability, and albumen and/or vitellis impermeability, used for the purposes of egg poaching, comes within the scope of the present invention as defined by the claims that follow.

It is understood that for clarity purposes, the word "density" may be substituted in the claims for "viscosity", because water, having a lower viscosity - and a lower thickness or density, is able to pass through the container, whereas the vitellus and albumen is of a higher viscosity - a higher thickness or density, and as such cannot pass through the body of the container.

It is understood that whilst water has a density of 1g /cm3, raw egg has a density range of 1.045 g/cm3 - 1.120 g/cm3.

## Claims

1. A container suitable for housing a cooking egg during cooking, wherein said container is water permeable, and is impermeable to liquids of the density of raw albumen and raw vittelus, wherein the container comprises a first sheet and a second sheet and wherein the two sheets are sealed to each other about their respective peripheral areas, around the, in-use, bottom region of the container, and wherein the in use top region is not sealed, wherein at the top region the unsealed sheets define an aperture so sized as to allow the introduction of a raw cooking egg into the container and **characterised in that** the container comprises a pair of open ends, the ends defining said aperture and wherein when the container is immersed in a water source and wetted, the open ends of the container tend to adhere gently to each other due to surface tension.

2. A container according to claim 1 wherein the container has an interior which comprises a flexible pouch.

3. A container according to claim 2, wherein the pouch is flat or flat-folding.

4. A container according to any of the preceding claims wherein the first sheet entirely overlies the second sheet.

5. A container according to any of the preceding claims, wherein the container is substantially oval in shape.

6. A container according to any of the preceding claims, wherein the container is ovoid in use.

7. A container according to any of the preceding claims, wherein the top region is substantially semi-circular and the bottom region is substantially elliptical.

8. A container according to any of the preceding claims, wherein the container comprises a non-stick material.

9. A container according to any of the preceding claims, which is made of heat-sealable paper.

10. A container according to any of the preceding claims, wherein the container is made of Infusion webbing.

11. A container according to any of the preceding claims, wherein the container is made from coffee filter paper.

12. A container according to any of the preceding claims, wherein the seal at the bottom of the container comprises an exterior-contacting face with one or more projections.

13. A container according to any of the preceding claims wherein the top region of the container comprises a pair of secondary apertures.

14. A container according to any of the preceding claims wherein, in use, the interior of the pouch is ovular in shape.

## Patentansprüche

1. Behältnis, geeignet zum Aufnehmen eines zu kochenden Eies während des Kochens, wobei das Behältnis wasserdurchlässig ist und undurchlässig für Flüssigkeiten mit der Dichte von rohem Eiweiß und rohem Eidotter ist, wobei das Behältnis eine erste Lage und eine zweite Lage umfasst und wobei die beiden Lagen an ihren jeweiligen Randbereichen um den - im Gebrauch - unteren Bereich des Behältnisses herum versiegelt sind, und wobei der - im Gebrauch - obere Bereich nicht versiegelt ist, wobei die im oberen Bereich nicht versiegelten Lagen eine Öffnung bilden, deren Größe so gewählt ist, dass sie die Einführung eines rohen, zu kochenden Eies in das Behältnis ermöglichen, und **dadurch gekennzeichnet, dass** das Behältnis ein Paar offene Enden aufweist, wobei die Enden die erwähnte Öffnung definieren und wobei, wenn das Behältnis in eine Wasserquelle getaucht wird und nass wird, die offenen Enden des Behältnisses dazu tendieren, aufgrund der Oberflächenspannung sanft aneinander zu haften.

2. Behältnis gemäß Anspruch 1, wobei das Behältnis ein Inneres hat, das einen flexiblen Beutel umfasst.

3. Behältnis gemäß Anspruch 2, wobei der Beutel flach oder flach zusammenfaltbar ist.

4. Behältnis gemäß einem der vorherigen Ansprüche, wobei die erste Lage die zweite Lage vollständig überdeckt.

5. Behältnis gemäß einem der vorherigen Ansprüche, wobei das Behältnis eine im Wesentlichen ovale Form aufweist.

6. Behältnis gemäß einem der vorherigen Ansprüche, wobei das Behältnis im Gebrauch eiförmig ist.

7. Behältnis gemäß einem der vorherigen Ansprüche, wobei der obere Bereich im Wesentlichen halbkreisförmig ist und der untere Bereich im Wesentlichen elliptisch ist.

8. Behältnis gemäß einem der vorherigen Ansprüche, wobei das Behältnis ein Antihaft-Material umfasst.

9. Behältnis gemäß einem der vorherigen Ansprüche, das aus heiß-siegelfähigem Papier hergestellt ist.

10. Behältnis gemäß einem der vorherigen Ansprüche, wobei das Behältnis aus aufgusstauglichem Gewebe hergestellt ist.

11. Behältnis gemäß einem der vorherigen Ansprüche, wobei das Behältnis aus Kaffeefilterpapier hergestellt ist.

12. Behältnis gemäß einem der vorherigen Ansprüche, wobei die Versiegelung im unteren Bereich des Behältnisses eine nach außen weisende Kontaktfläche mit einem oder mehreren Vorsprüngen umfasst.

13. Behältnis gemäß einem der vorherigen Ansprüche, wobei der obere Bereich des Behältnisses ein Paar zweiter Öffnungen umfasst.

14. Behältnis gemäß einem der vorherigen Ansprüche, wobei das Innere des Beutels - im Gebrauch - eine Eiform aufweist.

## Revendications

1. Un récipient approprié pour loger un oeuf à durcir durant la cuisson, dans lequel ledit récipient est perméable à l'eau, et est imperméable aux liquides de la densité de l'albumine crue et du vitellus cru, dans lequel le récipient comprend une première feuille et une deuxième feuille et dans lequel les deux feuilles sont scellées l'une à l'autre à l'endroit de leurs zones périphériques respectives, autour de la, lors de l'utilisation, région de dessous du récipient, et dans lequel la - lors de l'utilisation - région de dessus n'est pas scellée, dans lequel au niveau de la région de dessus les feuilles non scellées définissent une ouverture dimensionnée de façon à permettre l'introduction d'un oeuf à durcir cru dans le récipient et **caractérisé en ce que** le récipient comprend une paire d'extrémités ouvertes, les extrémités définissant ladite ouverture et dans lequel lorsque le récipient est immergé dans une source d'eau et mouillé, les extrémités ouvertes du récipient ont tendance à adhérer légèrement l'une à l'autre en raison de la tension de surface.

2. Un récipient selon la revendication 1 dans lequel le récipient a un intérieur qui comprend une poche flexible.

3. Un récipient selon la revendication 2, dans lequel la poche est plate ou pliable à plat.

4. Un récipient selon n'importe lesquelles des revendications précédentes dans lequel la première feuille recouvre entièrement la deuxième feuille.

5. Un récipient selon n'importe lesquelles des revendications précédentes, dans lequel le récipient est substantiellement de forme ovale.

6. Un récipient selon n'importe lesquelles des revendications précédentes, dans lequel le récipient est ovoïde lors de l'utilisation.

7. Un récipient selon n'importe lesquelles des revendications précédentes, dans lequel la région de dessus est substantiellement semi-circulaire et la région de dessous est substantiellement elliptique.

8. Un récipient selon n'importe lesquelles des revendications précédentes, dans lequel le récipient comprend un matériau antiadhésif.

9. Un récipient selon n'importe lesquelles des revendications précédentes, qui est fait de papier thermocollable.

10. Un récipient selon n'importe lesquelles des revendications précédentes, dans lequel le récipient est fait de toile à infusion.

11. Un récipient selon n'importe lesquelles des revendications précédentes, dans lequel le récipient est fait de papier-filtre à café.

12. Un récipient selon n'importe lesquelles des revendications précédentes, dans lequel le scellement au niveau du dessous du récipient comprend une face en contact avec l'extérieur avec une ou plusieurs projections.

13. Un récipient selon n'importe lesquelles des revendications précédentes dans lequel la région de dessus du récipient comprend une paire d'ouvertures secondaires.

14. Un récipient selon n'importe lesquelles des revendications précédentes dans lequel, lors de l'utilisation, l'intérieur de la poche est de forme ovulaire.
